# EUROPÄISCHE PATENTSCHRIFT

(11) **EP 0 930 273 B1**
(45) Veröffentlichungstag und Bekanntmachung des Hinweises auf die Patenterteilung: **16.05.2001**
(21) Anmeldenummer: 99100152.0
(22) Anmeldetag: 07.01.1999
(51) Int. Cl.: C02F 1/78, C02F 1/72, C02F 1/32, C02F 1/52, C02F 1/28, C02F 1/76, C02F 9/00

(54) **Verfahren und Vorrichtung zur Aufbereitung von mit Algen hochbeladenem Oberflächenwasser**
Method and device for the treatment of surface water with a high algae content
Méthode et dispositif pour le traitement des eaux de surface à teneur élevée en algues

(30) Priorität: 20.01.1998 DE 19801937
(43) Veröffentlichungstag der Anmeldung: 21.07.1999
(73) Patentinhaber: Eppler, Alwin Dipl.-Ing, 72280 Dornstetten (DE); Eppler, Dieter Dipl.-Ing., 72280 Dornstetten (DE)
(72) Erfinder: Eppler, Alwin Dipl.-Ing, 72280 Dornstetten (DE); Eppler, Dieter Dipl.-Ing., 72280 Dornstetten (DE)
(74) Vertreter: KOHLER SCHMID + PARTNER

(56) Entgegenhaltungen:
- FR-A- 2 738 235
- US-A- 4 049 545
- PATENT ABSTRACTS OF JAPAN vol. 016, no. 043 (C-0907), 4. Februar 1992 (1992-02-04) & JP 03 249990 A (HANSHIN SUIDO KIGIYOUDAN;OTHERS: 01), 7. November 1991 (1991-11-07)
- RIBAS ET AL: "Efficiency of various water treatment processes in the removal of biodegradable and refractory organic matter" WATER RESEARCH, Bd. 31, Nr. 3, 1. März 1997 (1997-03-01), Seite 639-649 XP004055044 ISSN: 0043-1354

## Beschreibung

Die Erfindung betrifft ein Verfahren und eine Vorrichtung zur Wasseraufbereitung für die Erzeugung von Trinkwasser aus Rohwasser.

Verfahrenskombinationen für stark belastete Rohwasser sind beispielsweise aus dem gleichnamigen Artikel von Dr. H. Overath, Wiesbaden in der DVGW-Schriftenreihe Nr. 206, Kurs 6: "Wasseraufbereitungstechnik für Ingenieure", 1980, Seiten 25-1 bis 25-25 beschrieben.

Eine Gegenüberstellung von Verfahrensschritten bei der Aufbereitung von Seewasser, Flußwasser und Grundwasser ist beispielsweise auch in dem Artikel von Dr. Ernst Gilbert "Wirkung der Ozonung bei der Trinkwasseraufbereitung" im Bericht Nr. 95 der TU München, 1990, Seiten 119 bis 144 gegeben.

Speziell mit der Donauwasseraufbereitung beschäftigt sich der Artikel "20 Jahre Donauwasseraufbereitung im Wasserwerk Langenau der Landeswasserversorgung" von Prof. Flinspach und Dr. Werner in der LW-Schriftenreihe, Stuttgart, Heft 13, Dezember 1993, Seiten 5 bis 23, wo die Entwicklung der Verfahren zur Aufbereitung von Flußwasser zu Trinkwasser in den letzten 30 Jahren schematisch dargestellt ist.

Speziell die Aufbereitung von hochbelasteten Seewässern aus flachen Seen wie beispielsweise dem Balaton bereitet jedoch besondere Probleme. Ein solches Wasseraufbereitungsverfahren muß für eine Abtrennung und Entfernung von Blaualgen und Kovaalgen aus dem hochbelasteten Rohwasser sowie die Entfernung bzw. Reduzierung von Trübstoffen und organischen Substanzen in einem solchen Umfange sorgen, daß das Wasser der EU-Trinkwassernorm (und der lokalen ungarischen Trinkwassernorm) entspricht. Dabei muß Wasser mit einer Algenzahl von ca. 10 Millionen Algen pro Liter (insbesondere bei Algenblüte) mit Nebenprodukten, hohen Anteilen an organischer Substanz sowie starker Trübung und schlechtem Geruch und Geschmack in normgerechtes Trinkwasser umgewandelt werden. Zulässig im Reinwasser sind jedoch nach den derzeitigen ungarischen Vorschriften lediglich 10000 tote Partikel pro Liter. Ein derartiger Reinheitsgrad kann mit den zur Zeit vorhandenen ungarischen Wasserwerken und den dort installierten Wasseraufbereitungsverfahren mit Balaton-Rohwasser fast nie erreicht werden. So stellt das OKI (Hygienisches Landesuntersuchungs-Institut Ungarn) bei fast allen Messungen des erzeugten Reinwassers eine Algenzahl weit über dem Grenzwert fest, wobei meistens Blaualgen sowie viele Halogene gefunden werden, obwohl lebende Algen im Reinwasser nach den Vorschriften eigentlich überhaupt nicht vorhanden sein dürften.

Die Verfahrensführung bei Wasseraufbereitungsanlagen am Balaton umfaßt in der Regel folgende Schritte:
1. Voroxidation mit Cl₂ oder KMnO₄ oder (auch in Kombination)
2. Flockungsstufe mit Schwebefilter
3. Sandfilterstufe oder auch anderer Aufbau, nicht jedoch Zweischichtfilter
4. Aktivkohlefilter (vorhanden im Wasserwerk Balatonfonyod; fehlt jedoch im Wasserwerk Balatonszeplak)
5. Desinfektion mit Cl₂.

Mit diesen derzeit verwendeten Aufbereitungsstufen läßt sich jedoch, wie bereits oben erwähnt, kein Wasser produzieren, das den lokalen ungarischen Normen oder der übergeordneten EU-Trinkwassernorm genügt. Die derzeitige Flockung ist nicht ausreichend effektiv gegen Algen. Zwar wurde vorgeschlagen, Mikrosiebe einzusetzen, was jedoch nur einen kleinen Rückhalt von ca. 50 % bei größeren Kovaalgen ergeben würde, während bei den wesentlich kleineren Blaualgen die Mikrosiebe völlig nutzlos wären.

Daher wurde bisher die Meinung vertreten, für die kleinen Blaualgen sei allgemein eine Filtration ungenügend, so daß bei der Voroxidation des Balaton-Rohwassers immer Chlor, Chlordioxid und KMnO₄ eingesetzt wurde. Gerade Chlor und Chlordioxid haben jedoch sehr schädliche Nebeneffekte auf das erzeugte Trinkwasser.

Bei den derzeit für Balatonwasser angewendeten Aufbereitungsverfahren ist eine Flockung durch Zugabe hauptsächlich von Al₂SO₄ zwischen 30 und 40 g/m³ und bei hoher Algenzahl, z.B. während der Algenblüte, zwischen 80 und 100 g/m³ üblich. Dabei wird in Folge des CO₂-Mangels im Balatonwasser aufgrund des hohen Kohlendioxid-Verbrauchs durch die im Balaton wachsenden Algen auch eine Ca-Ausfällung beobachtet. Die hohe Flockungsmittelzugabe mit Al₂SO₄ führt zu einer Erniedrigung des pH-Wertes unter den Gleichgewichtswert, so daß das behandelte Wasser außerdem recht korrosiv wird.

Die Gesamtkonzentration der organischen Kohlenstoffe läßt sich über den sog. DOC-Wert (= dissolved organic carbon), als auch den COD-Wert (= chemical oxygen demand, in Ungarn KOI-Wert genannt), messen. Durch die hohen Werte an gelösten organischen Kohlenstoffen, die im Reinwasser zwischen 1 bis 2 mg/l (DOC) bzw. zwischen 1 und 2,5 mg/l (KOI, COD) liegen sollten, die jedoch bei den derzeit verwendeten Verfahren zur Aufbereitung von Balatonwasser tatsächlich über 3 mg/l liegen, ist eine Nachentkeimung mit Chlordioxid wegen des zu hohen Anteils an organischen Substanzen im Trinkwasser nicht möglich.

Aufgabe der vorliegenden Erfindung ist es daher, ein Wasseraufbereitungsverfahren der eingangs genannten Art vorzustellen, mit dem Rohwasser aus Flüssen, Seen, Talsperren etc., welches in hohem Maß mit Mikroorganismen, insbesondere Zoo-plankton, Phytoplankton und Algen belastet ist, effizient und möglichst preiswert unter weitgehender Verwendung von vorhandenen Aufbereitungsanlagen in normgerechtes Trinkwasser übergeführt werden kann.

Erfindungsgemäß wird diese Aufgabe gelöst durch ein Verfahren zur Wasseraufbereitung für die Erzeugung von Trinkwasser aus Rohwasser mit folgenden Schritten:
(a) Immobilisierung und/oder Abtötung von im Rohwasser vorhandenen Mikroorganismen, insbesondere Bakterien, Viren und Algen, sowie Oxidation von organischen Stoffen im Wasser;
(b) 1. Flockung von im zu behandelnden Wasser enthaltenen Substanzen durch Zugabe mindestens eines Flockungsmittels;
(c) 1. Filtration des geflockten Wassers zur Reduktion des Gehalts an abgetöteten Mikroorganismen und zur Reduzierung der DOC-Werte (DOC = dissolved organic carbon = gelöster organischer Kohlenstoff) und der Wassertrübe;
(d) 2. Flockung durch Zugabe eines Flockungsmittels;
(e) 2. Filtration des geflockten Wassers zur weiteren Reduktion von organischen und/oder anorganischen Wasserinhaltsstoffen und der Wassertrübe;
(f) Oxidation der restlichen im Wasser vorhandenen organischen Substanzen;
(g) Filtration des behandelten Wassers mit einem Kornkohle-Filter.

Mit dem erfindungsgemäßen Verfahren, das erstmals für die Aufbereitung von Balatonwasser in einer Pilotanlage getestet wurde, kann auch mit Mikroorganismen hochbelastetes Rohwasser zu einwandfreiem Trinkwasser aufbereitet werden. Im Hinblick auf die zunehmende Verunreinigung von Binnengewässern kommt der möglichen Entfernung von Algen sowie der Reduzierung der DOC-Werte und der Trübung zur Einhaltung der gesetzlichen Trinkwassernormen beim Reinwasser eine besondere Bedeutung zu. Auch spielen bei der Wasseraufbereitung die Verfahrenskosten eine wichtige Rolle, die beim erfindungsgemäßen Verfahren gegenüber derzeit angewandten Aufbereitungsverfahren erheblich niedriger sind. Ein weiterer Vorteil des erfindungsgemäßen Verfahrens besteht darin, daß die verlangte Trinkwassergüte mit einfachen Mitteln, insbesondere mit größtenteils bereits vorhandenen Anlagen erhalten wird, und daß im aufbereiteten Wasser praktisch kein Eisen und Mangan mehr enthalten ist.

Weiterhin ist vorteilhaft beim erfindungsgemäßen Verfahren, daß der Geruch, die Farbe und der Geschmack des Wassers erheblich verbessert werden, daß das biologische Wachstum im Produktwasser eliminiert wird und auch Spuren von Phenolen entfernt werden. Bei den derzeitigen Aufbereitungsmethoden beispielsweise des Balatonwassers wird üblicherweise auch Chlorgas und KMnO₄ vor einer eventuellen Filtration zugegeben, was den biologischen Abbauprozeß von organischen Substanzen stört, Halogene im Produktwasser produziert und die Mota-Karziogenität sowie die Terratogenität fördert, was beim erfindungsgemäßen Verfahren vermieden wird.

Besonders bevorzugt wird in Schritt (a) eine Ozonisierung des Rohwassers vorgenommen. Neben der Abtötung und Immobilisierung von Bakterien, Viren und Algen bewirkt die Ozonisierung auch eine Oxidation von organischen Substanzen, Pestiziden, Herbiziden, Phenolen usw. sowie auch eine Oxidation von anorganischen Substanzen. Unter anderem findet auch eine Eisen- und Manganausfällung statt. Besonders vorteilhaft bei dieser Verfahrensvariante ist der Flockungseffekt des Ozons auf bestimmte Wasserinhaltsstoffe. Ein Teil der organischen Substanzen im Wasser wird durch die Ozonbehandlung aufgrund des Zerfalls und einer Mikroflockung stark reduziert. Die Oxidation erfolgt durch OH-Radikale. Unter anderem werden Phenole innerhalb von 100 s und Huminsäure innerhalb von wenigen Sekunden zu etwa 90 % abgebaut. Im Gegensatz zur bisher üblichen Voroxidation mit Cl₂, die den DOC-Gehalt erhöht, werden die Kohlenstoffwerte durch O₃-Zugabe ermäßigt. Die übliche Voroxidation mit Chlor in großen Mengen wegen der starken Algenbelastung kann sogar dazu führen, daß das Produktwasser toxisch wird. Durch die Ozonung hingegen wird zusätzlich eine hervorragende Mikroflockulation erreicht, was im anschließenden Flockungsschritt eine erheblich geringere Menge an Flockungsmitteln erforderlich macht.

Alternativ oder zusätzlich zur Ozonisierung kann in Schritt (a) auch H₂O₂ zum Rohwasser zugegeben werden. Dadurch werden die oben beschriebenen positiven Wirkungen der Ozonisierung noch weiter erhöht und die im Rohwasser vorhandenen Mikroorganismen zum überwiegenden Teil abgetötet.

Eine weitere Verbesserung ergibt sich durch eine zusätzliche Immobilisierung der Mikroorganismen in Schritt (a) durch Bestrahlung des Rohwassers mit ultraviolettem Licht.

Vorzugsweise wird in Schritt (b) ein oder mehrere Flockungsmittel in einer Menge von etwa 1/2 bis 1 1/2 g/m³ zu dem zu behandelnden Wasser zugegeben.

Als Flockungsmittel wird vorzugsweise FeCl3 verwendet.

Gleichzeitig kann in Schritt (b) der pH-Wert des zu behandelnden Wassers reguliert werden. Insbesondere kann zur Erniedrigung des oft zu hohen pH-Wertes Salzsäure oder Schwefelsäure zugegeben und damit eine Ausfällung von Ca-Anteilen aus dem zu behandelnden Wasser vermieden werden.

Die 1. Filtration in Verfahrensschritt (c) erfolgt vorteilhafterweise mit einer Filterlaufzeit von mehr als einem Tag. Anschließend wird dann das zur 1. Filtration verwendete Filter gereinigt um die große Menge von in Schritt (a) abgetöteten Mikroorganismen aus dem Wasser zu entfernen und eine Reduzierung der DOC-Werte sowie der Wassertrübe zu bewirken.

Die Filterreinigung des oder der zur 1. Filtration verwendeten Filter erfolgt vorteilhafterweise durch Spülung mit einem Wasserstrom hoher Geschwindigkeit.

Bei der nachfolgenden 2. Flockung in Verfahrensschritt (d) wird bevorzugt eine etwa doppelt so hohe Menge an Flockungsmittel zugegeben wie in Verfahrensschritt (b), vorzugsweise zwischen 1,5 bis 2,5 g/m³.

Vorteilhaft ist auch eine Zugabe von Polyaluminiumchlorid zum zu behandelnden Wasser in Verfahrensschritt (d).

Die in Schritt (e) erfolgende 2. Filtration wird bevorzugt in einer Zweischichtfilteranlage durchgeführt. Diese wird als Raumfilter so betrieben, daß die Filtergeschwindigkeit zwischen 5 und 10 m/h beträgt.

Das Material im Zweischichtfilter wird insbesondere vor dem Anfahren des Filters nach Stillstandszeiten durch kurzzeitiges Hindurchleiten von Luft aufgelockert, wobei die Luftmenge so dosiert wird, daß die Materialseparierung der Zweischichtfilterstruktur erhalten bleibt.

Durch die der 2. Filtration in Verfahrensschritt (e) vorgeschaltete 1. Filtration in Verfahrensschritt (c) lassen sich trotz hoher Rohwasserbelastung Filterlaufzeiten von etwa 48 bis 72 Stunden erreichen, da das Feinfilter durch das vorgeschaltete Grobfilter erheblich entlastet wird.

Die restlichen im Wasser vorhandenen organischen Substanzen werden im Verfahrensschritt (f) oxidiert, und zwar durch Zugabe von Ozon oder durch Zugabe von Peroxid oder durch Zugabe einer Kombination von beiden zum zu behandelnden Wasser.

Vorzugsweise liegt die Ozonzugabemenge zwischen etwa 1/3 und 1 g/m³, wodurch die restliche organische Substanz weiter in leicht biologisch abbaubare Stoffe zerlegt wird.

Besonders bevorzugt erfolgt die Filtration des zu behandelnden Wassers in Verfahrensschritt (g) mit einem biologisch adsorptiv arbeitenden Kornkohle-Filter, welches eine Bakterienpopulation zum weiteren Abbau von organischen Restsubstanzen aus dem Wasser aufweist. In der Regel werden anorganische Verbindungen wie Eisen oder Mangan während der 1. Filtration in Verfahrensschritt (c) und der 2. Filtration in Verfahrensschritt (e) weitestgehend aus dem behandelten Wasser entfernt und die DOC-Werte ebenso wie die Wassertrübe in die Nähe der gewünschten Endwerte reduziert. Nach der oxidativen Nachbehandlung des Wasser in Verfahrensschritt (f) wird dann in Verfahrensschritt (g) in der biologisch adsorptiven Aktivkohlefiltration ein weiterer Abbau der restlichen organischen Substanzen erreicht. Die DOC-Werte lassen sich bis auf 1-2 mg/l erniedrigen.

Wichtig ist, daß bei der Oxidation in Verfahrensschritt (f) die Menge an Oxidationsmittel so opimiert an das behandelte Wasser abgegeben wird, daß die biologische Aktivität der Bakterienpopulation im nachgeschalteten Aktivkohlefilter nicht behindert wird und die organisch zerlegten Substanzen im Wasser weitgehend von der Aktivkohle absorbiert werden.

Bei einer weiteren bevorzugten Verfahrensvariante werden die in den Schritten (e) und (g) verwendeten Filter entsprechend den Erfordernissen von Zeit zu Zeit mit Luft und/oder Wasser rückgespült, während die bei der 1. Filtration in Verfahrensschritt (c) verwendeten Filter, wenn sie als Schwimmkornfilter ausgelegt sind, nur mit Wasser rückgespült werden. Die Rückspülgeschwindigkeiten können je nach Anlagengröße und nach Art des Rohwassers, mit der die Anlage beschickt wird, individuell optimiert wird.

Bei einer besonders bevorzugten Verfahrensvariante erfolgt die Rückspülung mit einer Teilmenge des aus Verfahrensschritt (g) erhaltenen Produktwassers. Dabei wird der zur Rückspülung erforderliche Teil des gereinigten Wassers abgezweigt und zurückgeleitet, um mit sauberem, keimfreiem Wasser die Rückspülung vornehmen zu können.

Die Hauptmenge des aus Verfahrensschritt (g) erhaltenen Produktwassers wird in ein Reinwasserbecken geleitet, wobei vorzugsweise vor der Einleitung eine geringe Menge Chlor oder Cholrdioxid zugegeben wird, damit sich einwandfreie Bedingungen im Versorgungssystem einstellen und es auf diese Weise weder zu Problemen mit der Bildung von Halophormen noch zu einer Wiederverkeimung des Produktwassers kommt.

In den Rahmen der vorliegenden Erfindung fällt neben dem oben beschriebenen Verfahren auch eine Wasseraufbereitungsanlage für die Erzeugung von Trinkwasser aus Rohwasser mit einer Vorbehandlungsstufe, in die das zu behandelnde Rohwasser zur weitgehenden Immobilisierung und/oder Abtötung der darin enthaltenen Mikroorganismen, insbesondere Bakterien, Viren und Algen und zur Oxidation von organischen Stoffen im Wasser, eingeleitet werden kann, mit einer nachgeschalteten 1. Flockungsstufe zur Flockung von im zu behandelnden Wasser vorhandenen Substanzen durch Zugabe einer Flockungsmittels, mit einer nachgeschalteten 1. Filterstufe zur Reduktion des Gehalts an abgetöteten Mikroorganismen und zur Reduzierung des DOC-Wertes (DOC = dissolved organic carbon) und der Wassertrübe, mit einer nachgeschalteten, von der 1. Flockungsstufe räumlich getrennten 2. Flockungsstufe, mit einer nachgeschalteten, von der 1. Filterstufe räumlich getrennten 2. Filterstufe zur Ausfiltration der in der 2. Flockungsstufe geflockten Substanzen aus dem zu behandelnden Wasser, mit einer nachgeschalteten Oxidationsstufe zur Zerlegung der restlichen organischen Substanzen im behandelten Wasser in biologisch abbaubare Stoffe, und mit einer nachgeschalteten Kornkohle-Filterstufe zur weiteren Filtration des behandelten Wassers.

Zwar sind die einzelnen Stufe der erfindungsgemäßen Wasseraufbereitungsanlage ebenso wie die weiter oben beschriebenen einzelnen Verfahrensschritte für sich jeweils bekannt, jedoch führt erst die Kombination der einzelnen Stufen in der oben beschriebenen Reihenfolge zu den erfindungsgemäßen positiven Wirkungen im Sinne einer Lösung der obengenannten Erfindungsaufgabe. Gerade weil die einzelnen Stufen in vielen Wasserwerken bereits vorhanden oder leicht erfindungsgemäß zu modifizieren sind, ist die bisher unbekannte Gesamtkombination in Form der erfindungsgemäßen Wasseraufbereitungsanlage äußerst preisgünstig zu installieren.

Bei einer besonders bevorzugten Ausführungsform der erfindungsgemäßen Wasseraufbereitungsanlage umfaßt die Vorbehandlungsstufe einer Einrichtung zur Ozonisierung des zu behandelnden Wassers.

Alternativ oder zusätzlich kann die Vorbehandlungsstufe aber auch eine Einrichtung zur Zugabe von H₂O₂ zum zu behandelnden Wasser aufweisen.

Vorteilhaft ist auch eine Weiterbildung, bei der die Vorbehandlungsstufe eine Einrichtung zur Bestrahlung des zu behandelnden Wassers mit ultraviolettem Licht umfaßt. Damit kann der von der Oxidation nicht erfaßte Anteil von Mikroorganismen zumindest immobilisiert, an einer weiteren Vermehrung gehindert und in weiteren Stufen dann endgültig abgetötet und aus dem zu behandelnden Wasser ausgefiltert werden.

Besonders bevorzugt sind Ausführungsformen der erfindungsgemäßen Wasseraufbereitungsanlage, bei denen die 1. Filterstufe ein Schwebebettfilter und/oder ein Aufstromfilter und/ oder ein Schwimmkornfilter und/oder ein mit Sand und/oder Hydroanthrazit-H befülltes Filter umfaßt.

Insbesondere bei Verwendung von Sandfiltern wird vorzugsweise eine Körnung des Sandes von 0,35 - 0,5 mm eingesetzt.

Ganz besonders bevorzugt umfaßt die 2. Filterstufe eine Zweischichtfilteranlage.

Bei einer Weiterbildung dieser Ausführungsform weist die Zweischichtfilteranlage einen Überstauraum mit einer Höhe von mindestens 2 m und mehr auf, der für die Flockungsreife mitgenutzt werden kann.

Eine weitere vorteilhafte Weiterbildung zeichnet sich dadurch aus, daß die Zweischichtfilteranlage eine Lage Sand, vorzugsweise Quarzsand, mit einer Körnung von 0,35 - 0,5 mm oder von 0,4 - 0,6 mm und eine darüber liegende Lage Hydroanthrazit H mit einer Körnung von 1,4 - 2,5 mm aufweist. Dadurch werden die DOC-Werte (bzw. die entsprechenden KOI/COD-Werte) im behandelten Wasser weiter reduziert. Die Restalgenzahl liegt bei dieser Filterstufe schon in der Nähe des zu erreichenden Grenzwertes oder gar darunter und die Wassertrübe wird auf 0,2 bis 0,5 NTU gesenkt, was bereits einen sehr guten Wert darstellt.

Die Sandlage im Zweischichtfilter wird in der Regel eine Höhe von 3/4 bis 1 1/4 m, vorzugsweise 0,8 bis 1,2 m, und die Hydroanthrazit-H-Lage eine Höhe von 1 bis 1 1/2 m aufweisen. Durch die große Porösität des gröberen Hydroanthrazit H läßt sich hier der größte Teil der abzufilternden Stoffe einlagern, ohne daß ein zu schneller Anstieg des Druckverlustes erfolgen würde, während die für die Wasserqualität wichtige Feinreinigung in der darunterliegenden Feinsandschicht bewirkt wird.

Bei bevorzugten Weiterbildungen weist die Zweischichtfilteranlage einen Spezial-Düsenboden auf, über dem eine Stützschicht gröberer Körnung gelagert ist, die ihrerseits von einer Feinkornschicht überlagert ist.

Bei weiteren bevorzugten Ausführungsformen der erfindungsgemäßen Wasseraufbereitungsanlagen ist der 2. Flockungsstufe und/oder der 2. Filterstufe ein Becken zur Zwischenlagerung des behandelten Wassers vor Weiterleitung in die nächste Behandlungsstufe nachgeschaltet. In dieses Zwischenlagerungsbecken kann das aus dem oben beschriebenen Zweischichtfilter über Spezialfilterdüsen in den Filterunterboden geleitete Wasser weitergeleitet werden. Das von dieser Stufe zur Aufbereitung weitergeförderte Wasser besitzt einen Gleichgewichts-pH-Wert, eine sehr geringe Trübe und DOC-Werte, die bereits jetzt schon die Werte von an Versorgungsnetze abgegebenen Reinwässern der bisherigen Wasserwerke am Balaton erreichen.

Bei einer bevorzugten Ausführungsform der erfindungsgemäßen Wasseraufbereitungsanlage umfaßt die der 2. Filtrationsstufe nachgeschaltete Oxidaitonsstufe eine Einrichtung zur Ozonisierung des zu behandelnden Wassers. Ergänzend oder alternativ kann auch eine Einrichtung zur Zugabe von Peroxid (H₂O₂) vorgesehen sein.

Die Kornkohle-Filterstufe in der erfindungsgemäßen Wasseraufbereitungsanlage umfaßt vorzugsweise, wie bereits oben beschrieben, ein biologisch adsorptiv arbeitendes Aktivkohlefilter, welches eine Bakterienpopulation zum weiteren Abbau von organischen Substanzen aus dem behandelten Wasser aufweist. Die Aktivkohle besteht aus kleinsten Graphitkristallen mit einem immensen Hohlraumsystem von molekularer Dimension. So ergibt sich eine außerordentlich große innere Oberfläche, an die Moleküle jeder Art durch physikalische Anziehungskräfte angelagert bzw. adsorbiert werden können. Die Kornkohle wirkt auch katalytisch zur Entfernung von Restoxidationsmitteln aus dem behandelten Wasser.

Vorzugsweise enthält das Aktivkohlefilter extrudierte Kohlepartikel mit einem Durchmesser von 3/4 bis 1 mm, vorzugsweise ≤ 0,9 mm.

Bei bevorzugten Ausführungsformen basiert die granulierte Aktivkohle auf organischem Rohmaterial, insbesondere Torf, Braunkohle oder Steinkohle.

Die granulierte Aktivkohle sollte auf jeden Fall für eine Reaktivierung, insbesondere für eine thermische Reaktivierung bis über 900°C geeignet sein und eine hohe Reinheit, insbesondere einen As-Gehalt ≤ 5 ppm aufweisen.

Die Aktivkohleschicht sollte eine Schichthöhe von etwa 1 3/4 bis 2 1/2 m aufweisen und so betrieben werden, daß die Filtergeschwindigkeit zwischen 5 und 10 m/h beträgt.

Wie bereits oben beschrieben, ist die in der Oxidationsstufe zum behandelten Wasser zugegebene Menge an Oxidationsmittel (insbesondere Ozon) so optimiert abzugeben, daß die biologische Aktivität der Bakterienpopulation in der Aktivkohlestufe nicht behindert wird.

Unterhalb der Aktivkohleschicht kann eine Hydroanthrazit-H-Schicht vorgesehen sein. Die Körnung der Hydroanthrazit-H-Schicht sollte zwischen 0,6 und 1,6 mm gewählt werden und die Höhe der Schicht entsprechend den Erfordernissen des Produktwassers optimiert werden. Diese Stufe bewirkt auch weiterhin eine Wasserschönung.

Nach der Kornkohle-Filterstufe entspricht das gewonnene Reinwasser voll und ganz den gesetzlichen Grenzwerten bezüglich der anorganischen Substanzen, weist einen DOC-Wert von 1,0 bis 2,0 mg/l sowie eine Wassertrübe von 0,2 bis 0,5 NTU auf und die beobachtete Algenzahl liegt ebenfalls unterhalb der vorgeschriebenen Grenzwerte.

Bevorzugt ist schließlich eine weitere Ausführungsform der erfindungsgemäßen Wasseraufbereitungsanlage, bei der der Kornkohle-Filterstufe ein Spülwasserbecken nachgeschaltet ist, in welches eine Teilmenge des aus der Kornkohle-Filterstufe abfließenden behandelten Wassers zur Rückspülung von Filtern eingeleitet werden kann. Das Spülwasserbecken ist so zu dimensionieren, daß die entnommene Teilmenge für die Rückspülung der Filter mit sauberem, keimfreiem Wasser ausreicht. Die Hauptwassermenge des aus der Kornkohle-Filterstufe erhaltenen Produktwassers wird in ein Reinwasserbecken eingeleitet.

Bei geringerer Belastung des zu behandelnden Rohwassers mit Algen und organischen Substanzen kann die 1. Flockungsstufe und die 1. Filterstufe auch umfahren werden und in der 2. Flockungsstufe eine pH-Regulierung zur Verfahrensoptimierung erfolgen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigen:
- Fig. 1: eine erste Ausführungsform der erfindungsgemäßen Wasseraufbereitungsanlage; und
- Fig. 2: eine weitere Ausführungsform mit Schwebefilteranlage als 1. Filterstufe.

Erfindungsgemäß wird zur Wasseraufbereitung aus hochbelastetem Rohwasser, wie es beispielsweise aus mikroben- und algenverseuchten Flachwässern entnommen wird, eine Verfahrensführung mit folgenden Schritten vorgeschlagen:
(a) Immobilisierung und/oder Abtötung von im Rohwasser vorhandenen Mikroorganismen, insbesondere Bakterien, Viren und Algen, sowie Oxidation von organischen Stoffen im Wasser;
(b) 1. Flockung von im zu behandelnden Wasser enthaltenen Substanzen durch Zugabe mindestens eines Flockungsmittels;
(c) 1. Filtration des geflockten Wassers zur Reduktion des Gehalts an abgetöteten Mikroorganismen und zur Reduzierung der DOC-Werte (DOC = dissolved organic carbon = gelöster organischer Kohlenstoff) und der Wassertrübe;
(d) 2. Flockung durch Zugabe eines Flockungsmittels;
(e) 2. Filtration des geflockten Wassers zur weiteren Reduktion von organischen und/oder anorganischen Wasserinhaltsstoffen und der Wassertrübe;
(f) Oxidation der restlichen im Wasser vorhandenen organischen Substanzen;
(g) Filtration des behandelten Wassers mit einem Kornkohle-Filter.

Diese Verfahrensführung wurde erstmals in einer Pilotanlage mit Balaton-Wasser getestet. Die Anlage wurde so optimiert, daß die lokalen Grenzwerte für Trinkwasser mit dem aus der Anlage erzeugten Produktwasser eingehalten und sogar unterschritten werden konnten. Insbesondere wurden der Aufbau der Filtrationsstufen, sowie Material- und Kornaufbau, Verfahrensgeschwindigkeiten und Kontaktzeiten in den Aufbereitungsstufen sowie die Menge der Flockungsmittelzugabe und der Oxidationsmittelzugabe bei Rohwassertemperaturen zwischen 3°C bis 24°C optimiert. Das Verfahren eignet sich nicht nur für die Aufbereitung des Balatonwassers, sondern ebenso für Rohwasser aus Flüssen, Seen und Talsperren sowie anderen mit Mikroorganismen hoch belasteten Flachwässern. Die hohe organische Fracht von besonders kleinen Blaualgen, die anderweitig durch Siebe herausgeholt werden, kann entscheidend reduziert werden.

Durch die Oxidation erfolgt mit der organischen Substanz gleichzeitig eine Mikroflockulation, die mit Hilfe der nachfolgenden 1. Flockung ganz gezielt in der 1. Filtration aus dem Produktwasser entfernt und in der 2. Flockung und der nachfolgenden 2. Filtration in der Trübung auf normale Werte kommt. Ebenso werden organische Inhaltsstoffe, die nicht komplett in der 1. Filtration entfernt werden konnten, in der 2. Filtration weitgehend aus dem Produktwasser beseitigt, so daß nach der weiteren Oxidation und nach Durchlaufen des Kornkohle-Filters eine besonders hohe Reinheit des Produktwasser erreicht wird.

Selbst bei besonders hoher Belastung des Rohwassers - im Balatonwasser werden einige Millionen Algen pro Liter in der Algenblütezeit beobachtet - erhält man durch Einfügen der 1. Filtration eine entscheidende Ausfilterung der gesamten Wasserinhaltsstoffe. Die 1. Filtration mit der zugehörigen ersten Flockung wird so gefahren, daß die Filterlaufzeiten ungefähr einen Tag bis zur Durchführung der Filterspülung betragen und so Filterlaufzeiten in der 2. Filtration von 2 bis 3 Tagen selbst in Höchstlastzeiten erreicht werden können.

Die Oxidation in Schritt (f) dient dem weiteren Aufbrechen der restlichen organischen Substanz im Produktwasser, so daß eine bessere Adsorption im nachfolgenden biologisch adsorptiven Kornkohle-Filter erfolgen kann. Die Beladungszeiten des Kornkohle-Filters bei den obengenannten Verfahrensgeschwindigkeiten und Kontaktzeiten erhöhen sich entsprechend. Wenn in dem im Kornkohle-Filter enthaltenen Aktivkohlefilter eine Anthrazitschicht eingelagert wird, können nach einer Spülung aus der Aktivkohleschicht ausgetragene Kohleanteile besondere effektiv zurückgehalten werden.

Die Grenzwerte für Reinwasser im Balatonbereich können mit dem erfindungsgemäßen Verfahren voll eingehalten werden, insbesondere ergibt sich ein Anteil vo Fe < 0,2 mg/l, von Mn < 0,05 mg/l, von O₃ < 0,05 mg/l, von toten Mikroorganismen = 0,01 · 10⁶/l sowie DOC-Werte von 1 bis 2 mg/l und Trübungswerte von 0,2 bis 0,5 NTU.

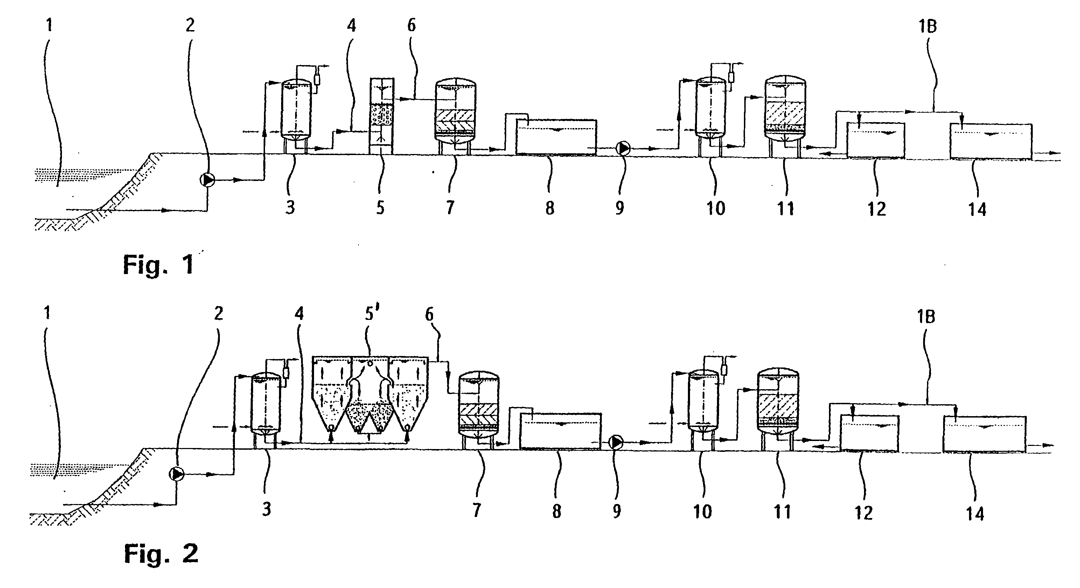

Anhand von Fig. 1 soll eine typische Ausführungsform der erfindungsgemäßen Wasseraufbereitungsanlage erklärt werden. Zunächst wird Wasser aus einem Gewässer 1, insbesondere aus einem mit Mikroorganismen stark belasteten Flachgewässer mittels einer Pumpe 2 als Rohwasser entnommen und einer Vorbehandlungsstufe 3 zugeführt, in der ein Großteil der im Rohwasser enthaltenen Mikroorganismen, insbesondere Bakterien, Viren und Algen, immobilisiert und abgetötet wird, und in der eine Oxidation von im Wasser enthaltenen organischen Stoffen erfolgt. Vorzugsweise wird die Vorbehandlungsstufe 3 eine Ozonisierung, möglicherweise aber auch alternativ oder in Kombination eine Peroxidierung des Rohwassers und eventuell auch eine Bestrahlung mit ultraviolettem Licht umfassen.

Der Vorbehandlungsstufe 3 nachgeschaltet ist eine 1. Flokkungsstufe 4, in der Flockungsmittel, vorzugsweise FeCl₃ zum Wasser zugegeben wird.

Danach wird das Wasser einer 1. Filterstufe 5 zugeführt, in der im gezeigten Beispiel im Aufstrom ein Großteil der geflockten Partikel, insbesondere die abgetöteten Mikroorganismen dem Wasser entzogen werden.

Aus der 1. Filterstufe 5 gelangt das behandelte Wasser in eine 2. Flockungsstufe 6 in der wiederum Flockungsmittel, ggf. auch Polyaluminiumchlorid zum Wasser zugegeben wird.

Hierauf folgt eine 2. Filterstufe 7, die vorzugsweise als Zweischichtfilteranlage ausgelegt ist, und die zur weiteren Reduktion von organischen und/oder anorganischen Wasserinhaltsstoffen sowie zur abermaligen Senkung der Wassertrübe dient.

Hierauf wird das behandelte Wasser einem Zwischenbecken 8 zur Zwischenlagerung vor der Weiterleitung in die nächste Behandlungsstufe zugeführt. Mittels einer Pumpe 9 wird das Wasser aus dem Zwischenbecken 8 einer im Abstrom arbeitenden Oxidationsstufe 10 zugeleitet. Alternativ kann das behandelte Wasser allerdings auch aus der 2. Filterstufe 7 direkt in die Oxidationsstufe 10 eingeleitet werden.

Vorzugsweise umfaßt die Oxidationsstufe 10 eine Einrichtung zur Ozonisierung des zu behandelnden Wassers, es kann aber auch zusätzlich oder alternativ Peroxid zugegeben werden.

Aus der Oxidationsstufe 10 wird das Wasser dann in eine ebenfalls im Abstrom betriebene Kornkohle-Filterstufe 11 eingeleitet.

Die Kornkohle-Filterstufe 11 umfaßt ein biologisch adsorptiv arbeitendes Aktivkohlefilter, welches eine Bakterienpopulation zum weiteren Abbau von organischen Substanzen aus dem Wasser aufweist. Zusätzlich kann die unterste Schicht in der Kornkohle-Filterstufe 11 auch von einer Lage Hydroantrazith-H mit etwas gröberer Körnung als die Kohlepartikel in der Aktivkohleschicht gebildet sein, um den Austrag von extrudierten Aktivkohlepartikeln zu minimieren.

Beim gezeigten Ausführungsbeispiel wird ein Teilstrom des aus der Kornkohle-Filterstufe 11 erhaltenen Produktwassers in ein Spülwasserbecken 12 abgezweigt, so daß die Rückspülung der Filter in der Anlage mit sauberem, keimfreiem Wasser vorgenommen werden kann. Dem Hauptstrom des Produktwassers kann in einer Desinfektionsstation 13 noch eine geringe Menge von Desinfetionsmittel, insbesondere Chlor oder Chlordioxid zugegeben werden, um eine Wiederverkeimung auszuschließen. Das so behandelte Wasser wird dann einem Reinwasserbecken 14 zugeleitet, von wo es zur Versorgung in Wassernetz entnommen werden kann.

Die in Fig. 2 dargestellte Ausführungsform der erfindungsgemäßen Wasseraufbereitungsanlage unterscheidet sich von der in Fig. 1 gezeigten Ausführungsform durch die Verwendung einer Schwebefilteranlage 5' als 1. Filterstufe. Die übrigen Teile der Anlage bleiben gegenüber Fig. 1 ungeändert.

## Patentansprüche

1. Verfahren zur Wasseraufbereitung für die Erzeugung von Trinkwasser aus Rohwasser mit folgenden Schritten:
(a) Immobilisierung und/oder Abtötung von im Rohwasser vorhandenen Mikroorganismen, insbesondere Bakterien, Viren und Algen, sowie Oxidation von organischen Stoffen im Wasser;
(b) 1. Flockung von im zu behandelnden Wasser enthaltenen Substanzen durch Zugabe mindestens eines Flokkungsmittels;
(c) 1. Filtration des geflockten Wassers zur Reduktion des Gehalts an abgetöteten Mikroorganismen und zur Reduzierung der DOC-Werte (DOC = dissolved organic carbon = gelöster organischer Kohlenstoff) und der Wassertrübe;
(d) 2. Flockung durch Zugabe eines Flockungsmittels;
(e) 2. Filtration des geflockten Wassers zur weiteren Reduktion von organischen und/oder anorganischen Wasserinhaltsstoffen und der Wassertrübe;
(f) Oxidation der restlichen im Wasser vorhandenen organischen Substanzen;
(g) Filtration des behandelten Wassers mit einem Kornkohle-Filter (11).

2. Verfahren nach Anspruch 1 dadurch gekennzeichnet, daß in Schritt (b) der pH-Wert des zu behandelnden Wassers reguliert, insbesondere Salzsäure oder Schwefelsäure zugegeben wird.

3. Verfahren nach einem der vorhergehenden Ansprüche, dadurch gekennzeichnet, daß in Schritt (c) die 1. Filtration mit einer Filterlaufzeit ≥ 24 h erfolgt, daß anschließend das zur 1. Filtration verwendete Filter gereinigt wird, und daß die Reinigung des Filters durch - Starkstromspülung mit Wasser erfolgt.

4. Verfahren nach einem der vorhergehenden Ansprüche, dadurch gekennzeichnet, daß die Filtration des behandelten Wassers in Schritt (g) mit einem biologisch adsorptiv arbeitenden Kornkohle-Filter (11) erfolgt, welches eine Bakterienpopulation zum weiteren Abbau von organischen Substanzen aus dem Wasser aufweist, und daß in Schritt (f) nur soviel Oxidationsmittel an das zu behandelnde Wasser abgegeben wird, daß die biologische Aktivität der Bakterienpopulation im nachgeschalteten Kornkohle-Filter (11) nicht behindert wird.

5. Verfahren nach einem der vorhergehenden Ansprüche, dadurch gekennzeichnet, daß die in den Schritten (e) und (g) verwendeten Filter von Zeit zu Zeit mit Luft und/oder Wasser rückgespült werden, und daß die Rückspülung mit einer Teilmenge des aus Schritt (g) erhaltenen Wassers erfolgt.

6. Wasseraufbereitungsanlage für die Erzeugung von Trinkwasser aus Rohwasser mit einer Vorbehandlungsstufe (3), in die das zu behandelnde Rohwasser zur weitgehenden Immobilisierung und/oder Abtötung der darin enthaltenen Mikroorganismen, insbesondere Bakterien, Viren und Algen und zur Oxidation von organischen Stoffen im Wasser, eingeleitet werden kann, mit einer nachgeschalteten 1. Flockungsstufe (4) zur Flockung von im zu behandelnden Wasser vorhandenen Substanzen durch Zugabe einer Flokkungsmittels, mit einer nachgeschalteten 1. Filterstufe (5; 5') zur Reduktion des Gehalts an abgetöteten Mikroorganismen und zur Reduzierung des DOC-Wertes (DOC = dissolved organic carbon) und der Wassertrübe, mit einer nachgeschalteten, von der 1. Flockungsstufe (4) räumlich getrennten 2. Flockungsstufe (6), mit einer nachgeschalteten, von der 1. Filterstufe (5; 5') räumlich getrennten 2. Filterstufe (7) zur Ausfiltration der in der 2. Flockungsstufe (6) geflockten Substanzen aus dem zu behandelnden Wasser, mit einer nachgeschalteten Oxidationsstufe (10) zur Zerlegung der restlichen organischen Substanzen im behandelten Wasser in biologisch abbaubare Stoffe, und mit einer nachgeschalteten Kornkohle-Filterstufe (11) zur weiteren Filtration des behandelten Wassers.

7. Wasseraufbereitungsanlage nach Anspruch 6, dadurch gekennzeichnet, daß die 1. Filterstufe (5; 5') ein Schwebebettfilter (5') und/oder ein Aufstromfilter (5) und/oder ein Schwimmkornfilter und/oder ein mit Sand und/oder Hydroanthrazit-H befülltes Filter umfaßt.

8. Wasseraufbereitungsanlage nach einem der Ansprüche 6 oder 7, dadurch gekennzeichnet, daß die 2. Filterstufe (7) eine Zweischichtfilteranlage umfaßt.

9. Wasseraufbereitungsanlage nach einem der Ansprüche 6 bis 8, dadurch gekennzeichnet, daß der 2. Flockungsstufe (6) und/oder der 2. Filterstufe (7) ein Becken (8) zur Zwischenlagerung des behandelten Wassers vor Weiterleitung in die nächste Behandlungsstufe nachgeschaltet ist.

10. Wasseraufbereitungsanlage nach einem der Ansprüche 6 bis 9, dadurch gekennzeichnet, daß der Kornkohle-Filterstufe (11) ein Spülwasserbecken (12) nachgeschaltet ist, in welches eine Teilmenge des aus der Kornkohle-Filterstufe (11) abfließenden behandelten Wassers zur Rückspülung - von Filtern eingeleitet werden kann.

## Claims

1. Method of treating water for producing drinking water from untreated water comprising the following steps:
(a) immobilization and/or destruction of microorganisms present in the untreated water, in particular, bacteria, viruses and algae, and oxidation of organic substances in water;
(b) 1. flocculation of substances contained in the water to be treated through addition of at least one flocculant;
(c) 1. filtration of the flocculated water for reducing the content of destroyed microorganisms and for reducing the DOC values (DOC = dissolved organic carbon) and the clouding of water;
(d) 2. flocculation through adding a flocculant;
(e) 2. filtration of the flocculated water for further reducing the organic and/or anorganic water content substances and clouding of water;
(f) oxidation of the remaining organic substances present in the water;
(g) filtration of the treated water through a grained carbon filter (11).

2. Method according to claim 1, characterized in that in step (b), the pH value of the water to be treated is regulated, in particular in that hydrochloric acid or sulphuric acid is added.

3. Method according to any one of the preceding claims, characterized in that in step (c ) the first filtration is carried out with a filter running time of ≥ 24h, that subsequently the filter used for the first filtration is cleaned and cleaning of the filter is carried out through a strong water flow.

4. Method according to any one of the preceding claims, characterized in that filtration of the treated water is effected in step (g) with a biologically adsorptively acting grained carbon filter (11) which has a bacteria population for further reduction of organic substances in the water and that in step (f) only a minimum amount of oxidant is supplied to the water to be treated such that the biological activity of the bacteria population is not impaired in the subsequent grained carbon filter (11).

5. Method according to any one of the preceding claims, characterized in that the filters used in steps (e) and (g) are backrinsed with air and/or water from time to time and that backrinsing is effected with part of the water obtained in step (g).

6. Water treatment plant for producing drinking water from untreated water comprising a pre-treatment step (3) into which the untreated water to be treated can be introduced for comprehensive immobilisation and/or destruction of the microorganisms contained therein, in particular bacteria, viruses and algae, and for oxidation of organic substances in the water, with a subsequent first flocculation step (4) for flocculating substances contained in the water to be treated through addition of a flocculant, comprising a subsequent first filtering step (5;5') for reducing the content of destroyed microorganisms and for reducing the DOC value (DOC = dissolved organic carbon) and the clouding of water, having a subsequent second flocculation step (6) spatially separated from the first flocculation step (4), with a subsequent second filtering step (7) spatially separated from the first filtering step (5;5') for filtering out substances flocculated in the second flocculation step (6) from the water to be treated, having a subsequent oxidation step (10) for disintegrating the remaining organic substances in the treated water into substances which can be biologically decomposed and comprising a subsequent grained carbon filtering step (11) for further filtration of the treated water.

7. Water treatment system according to claim 6, characterized in that the first filtering step (5; 5') comprises a floating bed filter (5') and/or an up-current filter (5) and/or a floating grained filter and/or a filter filled with sand and/or hydroanthrazite-H.

8. Water treatment plant according to any one of the claims 6 or 7, characterized in that the second filtering step (7) comprises a two-layer filtering plant.

9. Water treatment plant according to any one of the claims 6 through 8, characterized in that the second flocculation step (6) and/or the second filtering step (7) is followed by a basin (8) for preliminary storage of the treated water before passing it on to the next treatment step.

10. Water treatment system according to any one of the claims 6 through 9, characterized in that the grained carbon filtering step (11) is followed by a rinsing water basin (12) into which part of the amount of the treated water discharged from the grained carbon filtering step (11) can be introduced for backrinsing the filters.

## Revendications

1. Procédé de traitement de l'eau pour la production d'eau potable à partir d'eau brute, comportant les pas suivants :
a) immobilisation et/ou mort de micro-organismes se trouvant dans Peau brute, en particulier bactéries, virus et algues, et oxydation de matières organiques se trouvant dans l'eau ;
b) 1^{e} floculation de substances contenues dans l'eau à traiter par addition d'au moins un agent de floculation ;
c) 1^{e} filtration de l'eau ayant subi la floculation pour réduire la teneur en micro-organismes morts et réduire les valeurs DOC (DOC = dissolved organic carbon = carbone organique dissous) et le trouble de l'eau ;
d) 2^{e} floculation par addition d'un agent de floculation ;
e) 2^{e} filtration de l'eau ayant subi la floculation pour poursuivre la réduction des matières organiques et/ou inorganiques contenues dans l'eau ainsi que le trouble de l'eau ;
f) oxydation des substances organiques résiduelles se trouvant dans l'eau ;
g) filtration de l'eau traitée, au moyen d'un filtre à charbon calibré (11).

2. Procédé selon la revendication 1, caractérisé par le fait qu'au pas (b) on régule la valeur du pH de l'eau à traiter et qu'en particulier, on ajoute de l'acide chlorhydrique ou de l'acide sulfurique.

3. Procédé selon l'une des revendications précédentes, caractérisé par le fait qu'au pas (c), la première filtration se fait avec un temps de passage dans le filtre ≥ 24 h, qu'ensuite on nettoie le filtre employé pour la première filtration et que le nettoyage du filtre se fait par rinçage par un fort courant d'eau.

4. Procédé selon l'une des revendications précédentes, caractérisé par le fait que la filtration de l'eau traitée au pas (g) se fait avec un filtre à charbon calibré (11) travaillant par adsorption biologique, qui présente une population bactérienne pour poursuivre la suppression de substances organiques provenant de l'eau, et qu'au pas (f) on n'ajoute à l'eau à traiter que la quantité d'agent d'oxydation qui n'interdit pas l'activité biologique de la population bactérienne dans le filtre à charbon calibré (11) placé en aval.

5. Procédé selon l'une des revendications précédentes, caractérisé par le fait que de temps en temps on rince à contre-courant, à l'air et/ou à l'eau, les filtres employés aux pas (e) et (g) et que le rinçage à contre-courant se fait avec une partie de l'eau provenant du pas (g).

6. Installation de traitement de l'eau pour la production d'eau potable à partir d'eau brute, comportant un étage de prétraitement (3) dans lequel l'eau brute à traiter peut être amenée pour obtenir largement l'immobilisation et/ou la mort des micro-organismes qui y sont contenus, en particulier bactéries, virus et algues et pour oxyder des matières organiques contenues dans l'eau, comportant aussi un 1^{er} étage de floculation (4), placé en aval, pour traiter par floculation des substances se trouvant dans l'eau à traiter par addition d'un agent de floculation, ainsi qu'un premier étage de filtration (5 ; 5'), placé en aval, pour réduire la teneur en micro-organismes morts et réduire la valeur DOC (DOC = dissolved organic carbon/carbone organique dissous) et Ie trouble de l'eau, ainsi qu'un deuxième étage de floculation (6), placé en aval et séparé spatialement du premier étage de floculation (4), ainsi qu'un deuxième étage de filtration (7), placé en aval et séparé spatialement du premier étage de filtration (5 ; 5') pour extraire de l'eau à traiter, par filtration, les substances défloquées dans le deuxième étage de floculation (6), ainsi qu'un étage d'oxydation (10), placé en aval, pour décomposer en matière biologiquement dégradables les substances organiques résiduelles contenues dans l'eau traitée, ainsi qu'un étage de filtration à charbon calibré (11), placé en aval, pour poursuivre la filtration de l'eau traitée.

7. Installation de traitement de l'eau selon la revendication 6, caractérisée par le fait que le premier étage de filtration (5 ; 5') comporte un filtre à lit flottant (5') et/ou un filtre à courant ascendant (5) et/ou un filtre à charbon calibré flottant et/ou un filtre rempli de sable et/ou d'hydroanthrazite-H.

8. Installation de traitement de l'eau selon l'une des revendications 6 ou 7, caractérisé par le fait que le 2^{e} étage de filtration (7) comporte une installation de filtration à double couche.

9. Installation de traitement de l'eau selon l'une des revendications 6 ou 8, caractérisé par Ie fait qu'en aval du deuxième étage de floculation (6) et/ou du deuxième étage de filtration (7) est placé un bassin (8) pour Ie stockage intermédiaire de l'eau traitée avant transfert dans l'étage de traitement suivant.

10. Installation de traitement de l'eau selon l'une des revendications 6 ou 9, caractérisé par le fait qu'en aval de l'étage de filtration à charbon calibré (11) est placé un bassin d'eau pour rinçage (12) dans lequel une partie de l'eau traitée s'écoulant hors de l'étage de filtration à charbon calibré (11) peut être envoyée pour le rinçage des filtres à contre-courant.
